(19) **Europäisches Patentamt**
**European Patent Office**
**Office européen des brevets**

(11) **EP 1 867 678 B1**

(12) **EUROPEAN PATENT SPECIFICATION**

(45) Date of publication and mention
of the grant of the patent:
**28.03.2012 Bulletin 2012/13**

(51) Int Cl.:
*C08L 23/10* *(2006.01)*    *C08L 23/16* *(2006.01)*

(21) Application number: **07009241.6**

(22) Date of filing: **08.05.2007**

(54) **Thermoplastic elastomer composition and molded member obtained by molding the same**

Thermoplastische Elastomerzusammensetzung und durch formen derselben geformtes Element

Composition en élastomère thermoplastique et élément moulé obtenu par son moulage

(84) Designated Contracting States:
**DE**

(30) Priority: **16.06.2006 JP 2006167651**

(43) Date of publication of application:
**19.12.2007 Bulletin 2007/51**

(73) Proprietor: **Mazda Motor Corporation**
**Aki-gun,**
**Hiroshima 730-8670 (JP)**

(72) Inventors:
• **Onishi, Masaaki**
**Aki-gun**
**Hiroshima 730-8670 (JP)**
• **Nakajima, Yukinori**
**Aki-gun**
**Hiroshima 730-8670 (JP)**

• **Tanaka, Chikara**
**Aki-gun**
**Hiroshima 730-8670 (JP)**

(74) Representative: **Müller-Boré & Partner**
**Patentanwälte**
**Grafinger Straße 2**
**81671 München (DE)**

(56) References cited:
**EP-A- 1 445 279      EP-A- 1 683 836**
**EP-A1- 1 043 808     EP-A2- 0 618 259**
**WO-A2-2005/111134**

Remarks:
The file contains technical information submitted after the application was filed and not included in this specification

**Description**

The present invention relates to a thermoplastic elastomer composition and a molded member obtained by molding the same.

Conventionally, polyvinyl chloride has been widely used as a material of a trim member for an automotive vehicle or other plastic molded articles. Recently, meanwhile, soft thermoplastic olefin elastomer (hereinafter, referred to as "TPO" suitably) containing polypropylene (hereinafter, referred to as "PP" suitably) and olefin family rubber has become noticeable as a substitute of the polyvinyl chloride from an environment protection perspective. However, the TPO is clammy when its surface is touched with a hand, and is difficult to practically use because its poor tactile quality (namely, because it is unpleasant to touch)

The applicant has developed a molded member that is properly soft and superior in the tactile quality, by replacing part of the above-described PP by the poly(1-butene) (hereinafter, referred to as "PB" suitably) and setting SP (Solubility Parameter) of the olefin family rubber to be substantially the same as that of the PP (see US Patent Application Publication No. 2004/157998).

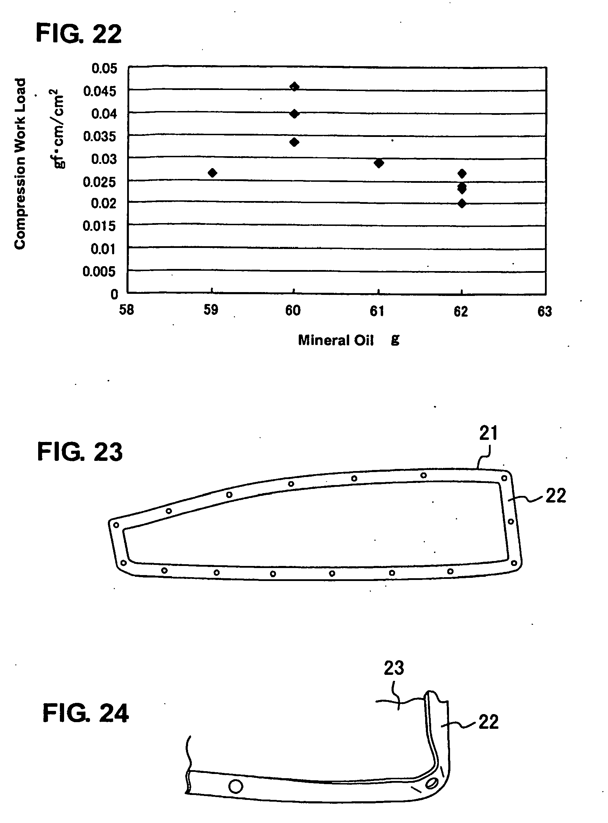

Herein, increasing the content of the above-described PB may improve the tactile quality (soft feeling), but the speed of crystallization of the PB itself may be improperly slow, thereby deteriorating its cooling and solidification. Thus, there is a problem in that when the molded member is removed out of a mold by being deformed after molding, a deformation of the molded member would not restore properly. FIG **23** shows a sample of the molded member that may tend to have such a problem. This figure shows a skin **21** of an armrest for a vehicle, viewed from the back. The skin **21** covers a core member of the armrest, and a cushion member is provided between the core member and the skin **21.** At a peripheral portion of the skin **21** is provided a turning-back portion **22** to cover the core member as shown. Accordingly, when being removed out of the mold, the skin **21** is supposed to be removed after this turning-back portion **22** has been opened outward. Herein, the problem is that the turning-back portion **22** that has once opened outward would maintain its deformed (opened) shape so as to rise of its skin back face **23** as shown in FIG. **24,** and thus its shape would restore its original shape completely. This inferior shape recovery property would cause an improper influence to an outer surface of the skin.

Meanwhile, reducing the content of the above-described PB may improve the above-described shape recovery property, but the fluidity of the molding material may become improperly slow, thereby deteriorating formability of proper particles

The present invention has been devised in view of the above-described problem, and an object of the present invention is to provide a thermoplastic elastomer composition and a molded member obtained by molding the same, which can be superior in the shape recovery property at the deformation, without deteriorating the tactile quality, gloss-change resistance, or formability of particles.

This object is solved by the thermoplastic elastomer composition and the molded member obtained by molding the same of the present invention. Preferred embodiments of the present invention are subject of the dependent claims.

According to the present invention, there is provided a thermoplastic elastomer composition, comprising per 100 parts by weight of ethylene-propylene-diene rubber (hereinafter, referred to as "EPDM" suitably), 20 to 30 parts by weight of polypropylene (PP), 7 to 30 parts by weight of ethylene octene rubber (hereinafter, referred to as "EOR" suitably), 7 to 23 parts by weight of propylene butene rubber (hereinafter, referred to as "PBR" suitably), and 55 to 65 parts by weight of mineral oil.

This composition comprises EPDM, EOR and PBR, which are the olefin family rubber, and contains the EOR and PBR so as to provide a molded member that is obtained by molding the composition with a softer tactile quality. Thereby, it may not be necessary to contain too much PB, so the shape recovery property of the molded member can be improved.

Meanwhile, the inventors of the present patent application have found that reducing the content of PB from perspective of improving the shape recovery property causes another problem in that the formability of particles of composition and the gloss-change resistance would deteriorate.

Namely, the EOR and PBR can enhance the fluidity of the composition and thereby the formability of particles, so if the content of the EOR and PBR was insufficient, the formability of particles would deteriorate. The inventors have also found that an insufficiency of PBR content may cause this deterioration of the formability of particles greatly. Accordingly, in the present invention, a lower limit of the PBR content is set to 7 parts by weight for avoiding the improperly great deterioration of the formability of particles, and a lower limit of the EOR content is also set to 7 parts by weight for maintaining the proper formability of particles.

Further, the inventors have found that increasing the content of PBR may cause the deterioration of the gloss-change resistance greatly. Therefore, in the present invention, an upper limit of the PBR content is set to 23 parts by weight for avoiding the improperly great deterioration of the gloss-change resistance, and an upper limit of the EOR content is set to 30 parts by weight from perspective of the proper gloss-change resistance.

Thus, the present invention has respectively the lower limit of 7 parts by weight of the EOR and the PBR per 100 parts by weight of the EPDM, which can improve the shape recovery property and formability of particles, and the upper limit of 30 parts by weight of the EOR and the upper limit of 23 parts by weight of the PBR per 100 parts by weight of the EPDM, which can maintain the proper gloss-change resistance.

Further, the lower limit of the content of the mineral oil of the present invention is set to 55 parts by weight per 100 parts by weight of the EPDM to secure the properly soft tactile quality despite the above-described upper-limit restrictions of the EOR and PBR. The upper limit of this oil content is set to 65 parts by weight to avoid the molded member becoming too clammy. Paraffin family process oil is preferable as the mineral oil, but any others, such as lubricating oil, liquid paraffin, polyethylene wax, polypropylene wax, petroleum asphalt, vaseline, may be applied.

Herein, the PP content is set to 20 to 30 parts by weight per 100 parts by weight of the EPDM. This is because its insufficient content may deteriorate a self-shape maintainability and also cause an improperly clammy tactile quality due to an increase of the average coefficient of friction of the molded member obtained, while its too-much content may require the necessity of increasing the oil for a hardness adjustment and thereby the clamminess would increase improperly.

According to an embodiment of the present invention, the thermoplastic elastomer composition further comprises 22 parts by weight or less of the PB per 100 parts by weight of the EPDM.

Namely, although the PB may deteriorate the shape recovery property of the molded member as described above, setting the upper limit of 22 parts by weight of the PB can improve the formability of particles and provide the proper tactile quality to the molded member obtained, without deteriorating the shape recovery property greatly.

According to another embodiment of the present invention, the PB content is 10 parts by weight or less.

The composition of the present embodiment can be superior in providing the proper formability of particles and the proper tactile quality without deteriorating the shape recovery property of the molded member obtained greatly.

It is preferable that a particle size of the above-described olefin family rubber be 0.3 $\mu$m or more. Thereby, a humidity feeling (whether it feels clammy or dry) can be prevented from deteriorating. Namely, although a smaller particle size may be preferable from perspective of the better humidity feeling, a too-small particle size would reduce the impact resistance of the molded member obtained. The particle size of the rubber of 0.3 $\mu$m or more may be preferable.

According to a molded member obtained by molding the above-described thermoplastic elastomer composition, an average coefficient of friction on a surface thereof is 0.27 or less, and the molded member has a displacement-load characteristic in which a compression recovery property is 53 to 85% in a region of a maximum load per cm$^2$ of 30 gf (3.0 x 10$^3$ Pa) or less.

The above-described embodiment is derived from a recognition regarding the tactile quality in that the humidity feeling (whether it feels clammy or dry) and the hardness feeling (whether it feels hard or soft) of the molded member are affected by its friction characteristic and a compression characteristic, in other words, the tactile .quality can be determined quantitatively by quantifying these characteristics to determine its superiority or inferiority. Namely, in a case where the average coefficient of friction affecting the humidity feeling exceeds above-described value, it may be difficult to stably obtain the tactile quality (humidity feeling) that is equivalent to or better than that of the polyvinyl chloride. Also, in a case where the compression recovery property affecting the hardness feeling is smaller than the above-described lower limit, it may be difficult to stably obtain the tactile quality equivalent to or better than that of the polyvinyl chloride. Thus, by using the above-described thermoplastic elastomer composition, the compression recovery property can be enhanced up to 85% or so, thereby improving the tactile quality of the molded member obtained.

Also, it is preferable that a compression work load of the molded member be 0.022 gf·cm/cm$^2$ (0.022 x 10$^{-2}$ N·cm/cm$^2$) or more in the above-described region of the displacement-load characteristic. It is further preferable that the compression recovery work load of the molded member be 0.012 gf·cm/cm$^2$ (0.012 x 10$^{-2}$ N·cm/cm$^2$) or more and a compression distortion be 0.0019 cm or more.

As described above, the proper impact resistance of the molded member can be maintained with the particle size of the olefin family rubber of 0.3 $\mu$m or more. Also, the particle size of the rubber in a surface portion of the molded member affects the humidity feeling, and the greater particle size of the rubber may increase the clamminess. Therefore, it is preferable that the maximum particle size of the olefin family rubber be 3 $\mu$m or less, thereby the humidity feeling of the molded member can be improved.

According to another embodiment of the present invention, the molded member is a trim member for a vehicle.

Namely, since the above-described molded member can provide the superior tactile quality that is equivalent to or better than that of the polyvinyl chloride, it can be properly applied to the trim member for a vehicle.

Other features, aspects, and advantages of the present invention will become apparent from the following description which refers to the accompanying drawings.

FIG. **1** is a schematic diagram showing a friction test apparatus.
FIG. **2** is a schematic diagram showing a compression characteristic test apparatus.
FIG **3** is a graph showing a displacement-load characteristic curve that is modeled.
FIG. **4** is a schematic diagram showing a scratch test apparatus to conduct a scratch resistance test.

FIG. **5** is a graph showing relationships between PB content of a composition and MFR.

FIG. **6** is a graph showing relationships between EOR content of the composition and the MFR.

FIG. **7** is a graph showing relationships between PBR content of the composition and the MFR.

FIG. **8** is a graph showing relationships between mineral oil content of the composition and the MFR.

FIG. **9** is a graph showing relationships between the PB content of the composition and a gloss changing rate.

FIG. **10** is a graph showing relationships between the EOR content of the composition and the gloss changing rate.

FIG. **11** is a graph showing relationships between the PBR content of the composition and the gloss changing rate.

FIG. **12** is a graph showing relationships between the mineral oil content of the composition and the gloss changing rate.

FIG. **13** is a graph showing relationships between the PB content of the composition and an average coefficient of friction.

FIG **14** is a graph showing relationships between the EOR content of the composition and the average coefficient of friction.

FIG. **15** is a graph showing relationships between the PBR content of the composition and the average coefficient of friction.

FIG. **16** is a graph showing relationships between PP content of the composition and the average coefficient of friction.

FIG. **17** is a graph showing relationships between the mineral oil content of the composition and the average coefficient of friction.

FIG. **18** is a graph showing relationships between the PB content of the composition and a compression work load.

FIG. **19** is a graph showing relationships between the EOR content of the composition and the compression work load.

FIG. **20** is a graph showing relationships between the PBR content of the composition and the compression work load.

FIG. **21** is a graph showing relationships between the PP content of the composition and the compression work load.

FIG. **22** is a graph showing relationships between the mineral oil content of the composition and the compression work load.

FIG. **23** is a plan view of a skin of an armrest for a vehicle as an exemplified molded member obtained by molding a thermoplastic elastomer composition.

FIG. **24** is an enlarged plan view of a portion of the skin for an explanation of an inferior molding of the skin.

Hereinafter, preferred embodiments of the present invention will be described referring to the accompanying drawings. It should be understood that even though embodiments are separately described, single features thereof may be combined to additional embodiments.

[Example and Comparative Sample]

The 23 parts by weight of the PP and the 60 parts by weight of the mineral oil (paraffin family process oil) were added to 100 parts by weight of the EPDM to provide a base material. To this base material are further added 10 parts by weight of the EOR, 10 parts by weight of the PBR and 4 parts by weight of silicon oil, per 100 parts by weight of the EPDM. Thereby, a thermoplastic elastomer composition according to an example 1 was obtained.

By changing kinds and contents (per 100 parts by weight of the EPDM) of materials to be added, some thermoplastic elastomer compositions according to examples 2, 3 and comparative samples 1-33 were obtained.

These examples and comparative samples are shown in the following table 1.

Table 1

| | Content (parts by weight) | | | | | | | Note |
|---|---|---|---|---|---|---|---|---|
| | EPDM | PP | Mineral Oil | PB | EOR | PBR | Silicon Oil | |
| Example 1 | 100 | 23 | 60 | 0 | 10 | 10 | 4 | |
| Example 2 | 100 | 24 | 62 | 6 | 24 | 18 | 5 | |
| Example 3 | 100 | 24 | 62 | 18 | 12 | 18 | 5 | no pelletizing |
| Comparative Sample 1 | 100 | 25 | 60 | 0 | 0 | 0 | 4 | |
| Comparative Sample 2 | 100 | 24 | 62 | 0 | 24 | 24 | 5 | |
| Comparative Sample 3 | 100 | 23 | 60 | 21 | 0 | 0 | 4 | |

(continued)

| | Content (parts by weight) | | | | | | | Note |
|---|---|---|---|---|---|---|---|---|
| | EPDM | PP | Mineral Oil | PB | EOR | PBR | Silicon Oil | |
| Comparative Sample 4 | 100 | 24 | 62 | 24 | 12 | 12 | 5 | |
| Comparative Sample 5 | 100 | 24 | 59 | 27 | 27 | 27 | 5 | pelletizing impossible |
| Comparative Sample 6 | 100 | 23 | 60 | 50 | 0 | 13 | 5 | |
| Comparative Sample 7 | 100 | 24 | 62 | 59 | 15 | 29 | 6 | pelletizing impossible |
| Comparative Sample 8 | 100 | 24 | 59 | 54 | 27 | 0 | 5 | |
| Comparative Sample 9 | 100 | 26 | 62 | 0 | 0 | 21 | 4 | |
| Comparative Sample 10 | 100 | 27 | 63 | 0 | 10 | 0 | 4 | |
| Comparative Sample 11 | 100 | 27 | 61 | 23 | 0 | 11 | 5 | |
| Comparative Sample 12 | 100 | 26 | 62 | 26 | 13 | 26 | 5 | |
| Comparative Sample 13 | 100 | 27 | 63 | 24 | 24 | 0 | 5 | |
| Comparative Sample 14 | 100 | 28 | 61 | 56 | 0 | 28 | 6 | molding impossible |
| Comparative Sample 15 | 100 | 26 | 62 | 51 | 13 | 0 | 5 | |
| Comparative Sample 16 | 100 | 27 | 64 | 61 | 30 | 15 | 6 | pelletizing impossible |
| Comparative Sample 17 | 100 | 27 | 62 | 0 | 0 | 0 | 4 | |
| Comparative Sample 18 | 100 | 27 | 61 | 23 | 11 | 0 | 5 | |
| Comparative Sample 19 | 100 | 27 | 61 | 23 | 0 | 11 | 5 | |
| Comparative Sample 20 | 100 | 27 | 63 | 24 | 12 | 12 | 5 | |
| Comparative Sample 21 | 100 | 23 | 60 | 5 | 10 | 5 | 4 | pelletizing impossible |
| Comparative Sample 22 | 100 | 25 | 62 | 19 | 25 | 12 | 5 | |
| Comparative Sample 23 | 100 | 24 | 62 | 37 | 44 | 22 | 6 | no pelletizing |
| Comparative Sample 24 | 100 | 23 | 60 | 19 | 38 | 6 | 5 | pelletizing impossible |
| Comparative Sample 25 | 100 | 25 | 62 | 31 | 12 | 12 | 5 | no pelletizing productivity |

(continued)

| | Content (parts by weight) | | | | | | | Note |
|---|---|---|---|---|---|---|---|---|
| | EPDM | PP | Mineral Oil | PB | EOR | PBR | Silicon Oil | |
| Comparative Sample 26 | 100 | 25 | 62 | 6 | 37 | 12 | 5 | pelletizing impossible |
| Comparative Sample 27 | 100 | 23 | 60 | 31 | 25 | 6 | 5 | pelletizing impossible |
| Comparative Sample 28 | 100 | 23 | 57 | 7 | 9 | 27 | 5 | |
| Comparative Sample 29 | 100 | 18 | 29 | 0 | 13 | 18 | 4 | |
| Comparative. Sample 30 | 100 | 28 | 61 | 0 | 11 | 42 | 6 | |
| Comparative Sample 31 | 100 | 24 | 61 | 53 | 21 | 0 | 5 | |
| Comparative Sample 32 | 100 | 33 | 47 | 40 | 0 | 0 | 4 | |
| Comparative Sample 33 | 100 | 42 | 45 | 0 | 0 | 0 | 4 | |
| Comparative Sample 34 | Polyvinyl chloride | | | | | | | |

In the table 1, the comparative sample 34 was made from the polyvinyl chloride, "pelletizing impossible" means a case where cutting (for particles) of the material from a mixing apparatus was impossible because of a lack of fluidity, and "molding impossible" means a case where measuring at a molding injection apparatus was impossible because of the lack of fluidity.

[Evaluation Items]

Evaluations on the following items were conducted for the above-described examples and comparative samples.

-MFR-

A MFR (Melt Flow Rate) is an item to evaluate the fluidity of the composition, which was measured based on K7120 of the JIS (Japanese Industrial Standard). Herein, measuring conditions were 230 degrees centigrade and 2.16 kg.

- Hardness -

The hardness of samples (molded members) obtained from respective compositions were measured with a hardness gage of the JIS.

- Average Friction Coefficient and Change of Friction Coefficient -

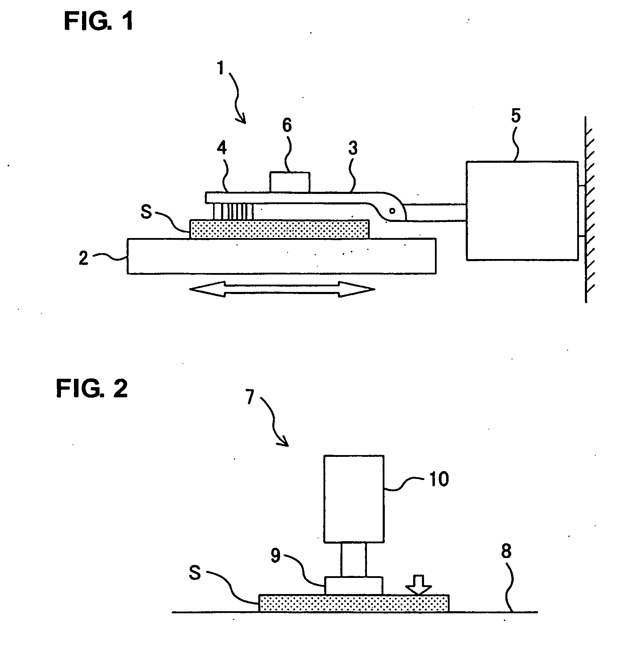

An average coefficient of friction and a change of friction coefficient of the sample molded members were obtained by using a friction test apparatus 1 (KES friction tester) shown in FIG. 1. Each sample S of the molded members was placed on and fixed to a sample table 2, and then a contact 4 that was attached to the tip of an arm 3 was provided to contract the upper surface of the sample S. Around the contact 4 was wound a piano wire, which was made contact the upper surface by a weight 6 that was placed on the arm 3. At a base of the arm 3 was provided a friction force sensor 5. Herein, as the sample table 2 was reciprocated in the horizontal surface along the longitudinal direction of the arm 3, a friction force F was generated between the upper surface of the sample S and the piano wire provided at the contact 4. This friction force F was measured by the friction force sensor 5. Herein, the friction force generated between the upper surface of the sample S and the piano wire provided at the contact 4 can be changed according to a weight of the weight **6** on the arm **3.** A load P in a unit area applied by the contact **4** to the sample S was set to 2.0 x 10⁴ Pa, and the moving speed of the sample table **2** was set to 1 mm/sec.

The friction coefficient μ, average friction coefficient $\underline{\mu}$ and friction coefficient change MMD are defined by the following equations [1] to [3].

$$\mu = F/P \qquad\qquad --[1]$$

$$\underline{\mu} = (1/L\,max)\ \oint^{L\,max} \mu\,dL) \qquad --[2]$$

$$MMD = (1/L\,max)\ \oint^{L\,max} |\mu - \underline{\mu}|\,dL) \quad --[3]$$

Herein, L indicates a moving distance of the sample S relative to the contact **4,** and L max indicates its maximum moving distance.

- Compression Characteristic -

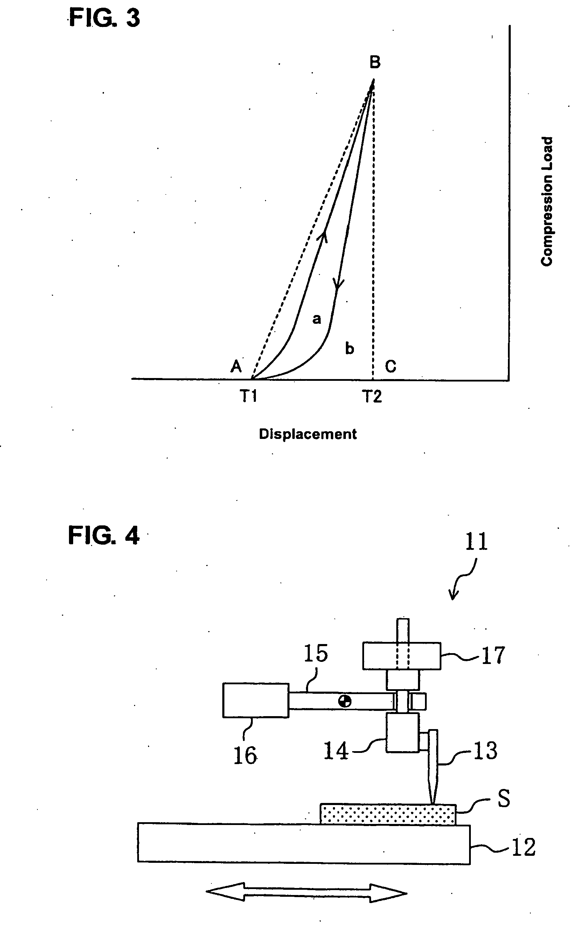

The compression characteristic seems to correspond to an index of the hardness feeling. In this embodiment, a test apparatus **7** (a KES compression tester) whose structure is schematically shown in FIG. **2** was used for measuring the compression characteristic of each sample. Specifically, with the sample S placed on a fixed table **8,** the surface of the sample S was pressed with a presser **9** having a flat lower face so as to measure the compression characteristic with a compression force sensor **10.** In this case, the compression load in a unit area was set to 3.0 x 10³ Pa. This apparatus was used for measuring the displacement-load characteristic of each sample **S**, and respective parameters of a compression work load, a compression recovery work load, a compression recovery property, a compression rigidity, a compression distortion are calculated based on a characteristic curve of the displacement-load characteristic. FIG. **3** shows a modeled displacement-load characteristic curve. With reference to FIG. **3,** the above-descried parameters will be described. The respective parameters may be obtained as follows:

$$\text{Compression work load (gf·cm/cm}^2) = \text{area } \mathbf{a} + \text{area } \mathbf{b}$$

$$\text{Compression recovery work load (gf·cm/cm}^2) = \text{area } \mathbf{b}$$

$$\text{Compression recovery property (\%) = (compression recovery work load/compression work load)} \times 100$$

$$\text{Compression rigidity (\%) = (area } \mathbf{a} + \text{area } \mathbf{b})/\text{area of triangle ABC} \times 100$$

$$\text{Compression distortion (cm) = T1} - \text{T2}$$

Herein, T1 indicates an initial thickness of the sample, and T2 indicates the thickness of the sample obtained under the maximum load (3.0 x 10³ Pa, 30 gf/cm²).

- Gloss-Change Resistance -

A gloss-change resistance test apparatus with an ultraviolet-carbon-arc lamp that is based on B7753 of the JIS was used to evaluate a changing rate of gloss after 20 hours with 83 degrees centigrade heating. The gloss changing rate was calculated by the following equation:

$$\text{Gloss changing rate} = (60 \text{ degrees gloss after testing} - 60 \text{ degrees before testing})/60$$
$$\text{degrees gloss before testing.}$$

Herein, a negative gloss changing rate (like, for instance, "-0.29" of the comparative sample 1 in a table 2) indicates that the gloss has decreased after the testing.

- Wear Resistance -

With respect to a wear resistance, the type-II friction test apparatus of L0823 of the JIS was used, and a 3000-time-reciprocating friction with a load of 4.9 N (0.5 kgf) and with a reciprocating speed of 100 mm/sec was applied to each sample of molded members. Then, the surface of each sample S was examined by the observation with eyes, and observation results were obtained with the following standard of grade. The standard of grade was as follows:

Grade 5.0 - - - No change in the gloss of a grain side is observed.
Grade 4.5
Grade 4.0 - - - Some change in the gloss of the grain side is observed.
Grade 3.5
Grade 3.0 - - - A convex surface of the grain side is eroded.
Grade 2.5
Grade 2.0 - - - A concave surface of the grain side is eroded.
Grade 1.5
Grade 1.0 - - - Observation of the grain side can not done.

- Scratch Resistance -

A scratch resistance test was conducted by using a scratch test apparatus **11** shown in FIG. 4. Herein, in this scratch test apparatus **11,** the sample S of the molded member was placed on and fixed to a sample table **12,** and then a contact **13** was provided to contract the upper surface of the sample **S**. The contact **13,** which was designed to imitate the human's nail, was made of ABS (acrylnitril-butadiene-styrene) resin having hardness of 103. Its tip end was of a circular shape having a diameter of 2 mm. The contact **13** was attached to a load applying member **14** that was movably supported vertically on a fixed member, not illustrated. This load applying member **14** was coupled to one end of a balance lever **15,** and to the other end of the balance lever **15** was fixed a counterweight **16.** A weight **17** can be placed at the upper surface of the load applying member **14**, so that the load of the contact **13** applied to the sample **S** was adjustable according to the weight **17**. Namely, at first the load applying member **14** and the like was balanced with the counterweight **16,** and then the weight of the weight **17** was adjusted so that the contact **13** just contacts the upper surface of the sample **S**. From this state, the weight of the weight **17** was increased by 0.1 kg so that the above-described load can be 0.98 N (0.1 kgf). Then, the table **12** was reciprocated at the speed of 200 mm/s. After the 100-time reciprocating scratch was conducted, the upper surface of the sample S was examined by the observation with eyes, and observation results of the scratch resistance test were obtained with the same standard of grade as the wear resistance test.

- Synthetic Sebum Contamination Resistance -

A synthetic sebum contamination resistance was evaluated by using a friction test apparatus, in which a contact equipped with a cotton, to which cosmetic was applied, was reciprocated on the grain side of each sample of the molded members. The Dicila fine finishing powder (made by Dicila Co., Ltd.) was used as the somatic. This powder was applied to the cotton with five-time pushing thereof onto the powder. A friction distance was 100 mm, a load was 500 gf, a reciprocating frequency was one time, and a friction speed was 1200 mm/minute. The synthetic sebum contamination resistance was evaluated with five grades, Grade 5 (superior) to Grade 1 (inferior) by eyes observation.

- Shape Recovery Property -

A shape recovery property of each sample was predicted based on the PB content because it generally depends on the content of the PB of the composition. Specifically, the shape recovery property of the content of 20 parts by weight or less of the PB indicates a "good" property, and that of the content of more than 20 parts by weight of the PB indicates a "poor" property.

[Evaluation Results]

A table 2 shows evaluation results of the examples and the comparative samples. A table 3 shows the compression characteristics of some cases of those.

Table 2

| | MFR g/10 mins | Hardness JIS A | Average Friction Coeff. | Friction Coeff. Change | Compression Work Load | Gloss-Change Resistance | | Wear Resistance | Scratch Resistance | Synthetic Sebum Contamina-tion Resistance | Shape Recovery Property |
| | | | | | | Changing Rate | Eyes Observation | | | | |
|---|---|---|---|---|---|---|---|---|---|---|---|
| Example 1 | 1.04 | 73 | 0.078 | 0.0065 | 0.033 | 0.04 | good | 1.0 | 4.0 | 3.0 | good |
| Example 2 | 1.12 | 77 | 0.153 | 0.0092 | 0.024 | 0.18 | good | 1.7 | 4.5 | 3.0 | good |
| Example 3 | 1.45 | 77 | | | | | | | | | good |
| Comparative Sample 1 | 0.02 | 66 | 0.209 | 0.0085 | 0.046 | -0.29 | good | 1.0 | 2.8 | 3.3 | good |
| Comparative Sample 2 | 26.10 | 80 | 0.078 | 0.0089 | 0.020 | 0.45 | poor | 2.0 | 4.5 | 2.3 | good |
| Comparative Sample 3 | 0.36 | 71 | 0.077 | 0.0069 | 0.040 | 0.13 | good | 1.0 | 4.5 | 3.2 | poor |
| Comparative Sample 4 | 16.80 | 76 | 0.089 | 0.0080 | 0.027 | 0.07 | good | 1.5 | 4.5 | 2.5 | poor |
| Comparative Sample 5 | | | | | | | | | | | poor |
| Comparative Sample 6 | 11.60 | 83 | 0.100 | 0.0083 | ·0.025 | 0.38 | poor | 2.0 | 4.5 | 2.7 | poor |
| Comparative Sample 7 | | | | | | | | | | | poor |
| Comparative Sample 8 | 5.32 | 73 | 0.082 | 0.0068 | 0.026 | 0.07 | good | 1.0 | 4.5 | 2.7 | poor |
| Comparative Sample 9 | 34.30 | 85 | 0.098 | 0.0090 | 0.019 | 0.31 | poor | 2.5 | 5.0 | 1.7 | good |
| Comparative Sample 10 | 0.03 | 70 | 0.171 | 0.0101 | 0.039 | 0.10 | good | 1.0 | 5.0 | 2.5 | good |
| Comparative Sample 11 | 17.90 | 83 | 0.112 | 0.0088 | 0.019 | -0.11 | good | 2.0 | 5.0 | 2.2 | poor |
| Comparative Sample 12 | 27.50 | 87 | 0.183 | 0.0131 | 0.019 | 0.30 | poor | 2.5 | 4.5 | 1.5 | poor |
| Comparative Sample 13 | 0.39 | 71 | 0.166 | 0.0095 | 0.030 | 0.25 | poor | 1.0 | 5.0 | 2.0 | poor |
| Comparative Sample 14 | | | | | | | | | | | poor |

| | | | | | | | | | | | |
|---|---|---|---|---|---|---|---|---|---|---|---|
| Comparative Sample 15 | 4.39 | 81 | 0.120 | 0.0080 | 0.020 | 0.00 | good | 1.5 | 5.0 | 2.5 | poor |
| Comparative Sample 16 | | | | | | | | | | | poor |
| Comparative Sample 17 | 0.06 | 73 | 0.137 | 0.0131 | 0.023 | 0.55 | poor | 1.0 | 4.2 | 2.2 | good |
| Comparative Sample 18 | 0.88 | 77 | 0.140 | 0.0149 | 0.023 | 0.50 | poor | 1.2 | 4.5 | 2.7 | poor |
| Comparative Sample 19 | 30.20 | 85 | 0.157 | 0.0150 | 0.019 | 0.39 | poor | 2.0 | 4.5 | 2.5 | poor |
| Comparative Sample 20 | 25.60 | 87 | 0.180 | 0.0186 | 0.016 | 0.46 | poor | 1.5 | 4.2 | 2.2 | poor |
| Comparative Sample 21 | 0.05 | | | | | | | | | | |
| Comparative Sample 22 | 0.42 | 75 | 0.155 | 0.0098 | 0.023 | 0.08 | good | 1.7 | 4.7 | 2.8 | good |
| Comparative Sample 23 | 2.66 | 81 | | | | | | | | | poor |
| Comparative Sample 24 | 0.30 | | | | | | | | | | |
| Comparative Sample 25 | 1.01 | 75 | | | | | | | | | |
| Comparative Sample 26 | 0.34 | | | | | | | | | | |
| Comparative Sample 27 | 0.31 | | | | | | | | | | |
| Comparative Sample 28 | 1.30 | 71 | | | | 0.42 | poor | | | | good |
| Comparative Sample 29 | 5.45 | 76 | | | | 1.00 | poor | | | | good |
| Comparative Sample 30 | 1.98 | 75 | 0.388 | 0.0182 | 0.025 | 0.61 | poor | 1.5 | 5.0 | 2.5 | good |
| Comparative Sample 31 | 6.50 | 76 | 0.202 | 0.0138 | 0.029 | 0.20 | good | 1.8 | 4.5 | 2.0 | poor |
| Comparative Sample 32 | 15.7 | 81 | 0.458 | 0.0258 | 0.021 | | | 2.0 | 2.8 | | poor |
| Comparative Sample 33 | 12.7 | 80 | 0.238 | 0.0113 | 0.019 | | | 1.5 | 2.8 | | good |
| Comparative Sample 34 | | 59 | 0.364 | 0.0119 | 0.040 | 0.00 | good | 3.0 | 3.8 | 3.0 | good |

Compression work load; gf·cm/cm$^2$; Changing rate of the gloss-change resistance = gloss changing rate

Table 3

| | Compression Work Load (gf·cm/cm$^2$) | Compression Recovery Work Load (gf cm/cm$^2$) | Compression Recovery (%) | Compression Rigidity (%) | Compression Distortion (cm) |
|---|---|---|---|---|---|
| Example 1 | 0.033 | 0.025 | 74.9 | 74.1 | 0.0030 |
| Example 2 | 0.024 | 0.019 | 80.9 | 71.4 | 0.0022 |
| Comparative Sample 1 | 0.046 | 0.036 | 79.4 | 47.8 | 0.0144 |
| Comparative Sample 2 | 0.020 | 0.016 | 81.6 | 79.9 | 0.0017 |
| Comparative Sample 3 | 0.040 | 0.028 | 72.6 | 69.2 | 0.0038 |
| Comparative Sample 4 | 0.027 | 0.021 | 79.2 | 70.1 | 0.0051 |
| Comparative Sample 8 | 0.026 | 0.021 | 81.1 | 73.6 | 0.0024 |
| Comparative Sample 22 | 0.023 | 0.019 | 81.0 | 72.4 | 0.0021 |

(continued)

|  | Compression Work Load (gf·cm/cm$^2$) | Compression Recovery Work Load (gf cm/ cm$^2$) | Compression Recovery (%) | Compression Rigidity (%) | Compression Distortion (cm) |
|---|---|---|---|---|---|
| Comparative Sample 32 | 0.021 | 0.011 | 51.5 | 76.7 | 0.0018 |
| Comparative Sample 33 | 0.019 | 0.010 | 52.6 | 67.5 | 0.0019 |
| Comparative Sample 34 | 0.040 | 0.031 | 72.9 | 62.0 | 0.0046 |

- Concerning Formability of Particles -

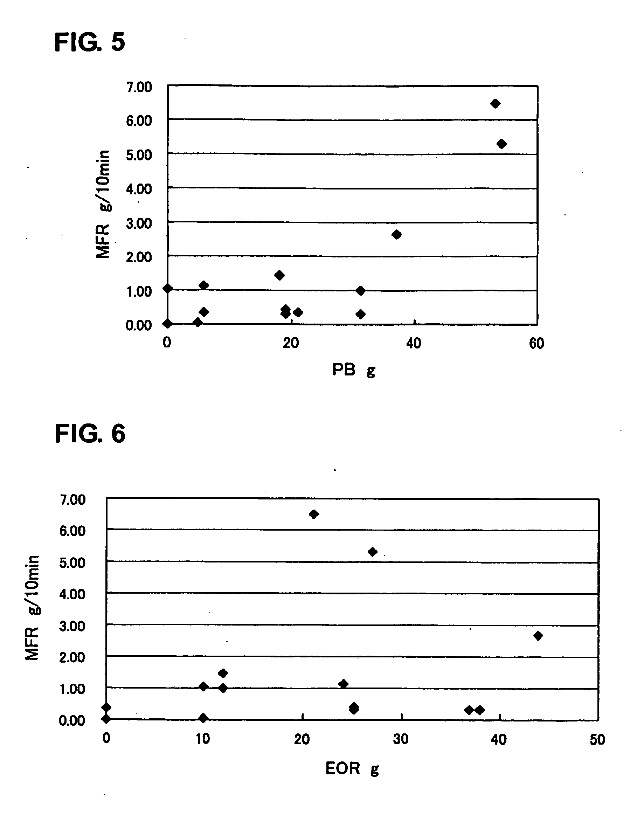

FIG **5** is a graph showing how the PB content of the composition affects the MFR, with data of some of the above-described examples and comparative samples (the examples 1 - 3, comparative samples 1, 3, 8, 21 - 27, 31). This showed a tendency that the MFR increases as the PB content increases. However, it is also apparent from this that even if the PB content is 22 g or less, 10 g or less, or even zero, a necessary MFR (1.00 g/min or more) can be secured by adding another material.

In FIGS. **5** to **22** and descriptions on these figures, the content of each composition material is indicated by gram "g" per 100 parts by weight of the EPDM.

FIG. **6** is a graph showing how the EOR content of the composition affects the MFR, with data of some of the above-described examples and comparative samples (the examples 1 - 3, comparative samples 1, 3, 8, 21 - 27, 31). No particular relationship between them was recognized. Herein, there were some cases in which the MFR was 1.00 g/min or more by adding a large content of the PB or a certain content of the PBR.

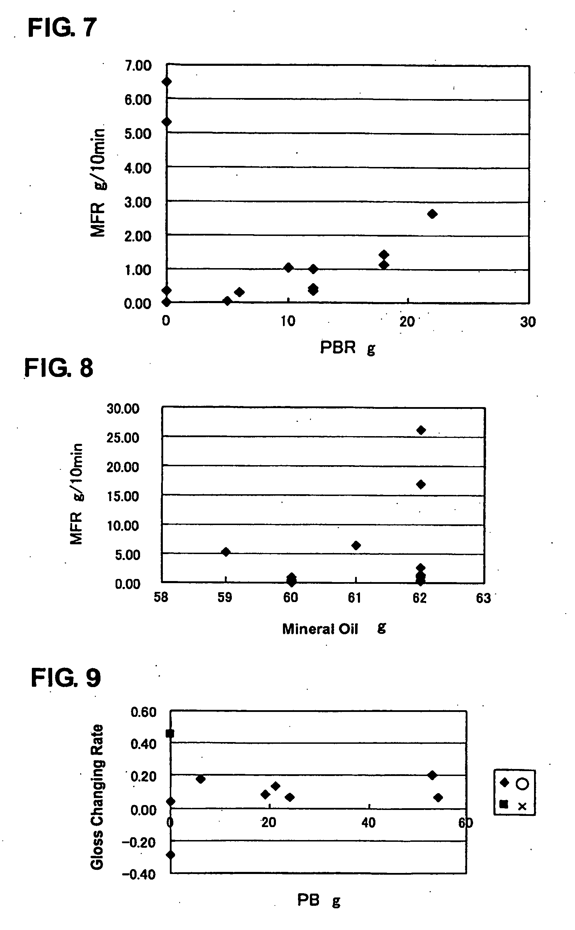

FIG. **7** is a graph showing how the PBR content of the composition affects the MFR, with data of some of the above-described examples and comparative samples (the examples 1 - 3, comparative samples 1, 3, 8, 21 - 27, 31). This showed a tendency that the MFR increases as the PBR content increases. In other words, the MFR may deteriorate if the PBR content is too small. A case showing the superior MFR with a zero content of the PBR was the comparative samples 8 and 31 containing the PB of 50 g or more.

FIG. **8** is a graph showing how the mineral oil content of the composition affects the MFR, with data of some of the above-described examples and comparative samples (the examples 1 - 3, comparative samples 1, 3, 8, 21 - 27, 31). No particular relationship between them was recognized.

Accordingly, it is apparent that increasing the PBR content may be effective to secure the necessary MFR with the reduced PB content, thereby improving the formability of particles.

- Concerning Gloss-Change Resistance -

FIG **9** is a graph showing how the PB content of the composition affects the changing rate of the gloss, with data of some of the above-described examples and comparative samples (the examples 1, 2, comparative samples 1 - 4, 8, 22, 31). No particular relationship between them was recognized. A case showing the gloss changing rate of 0.45 (inferior gloss-change resistance) was the comparative sample 2 containing the PBR of 24 g.

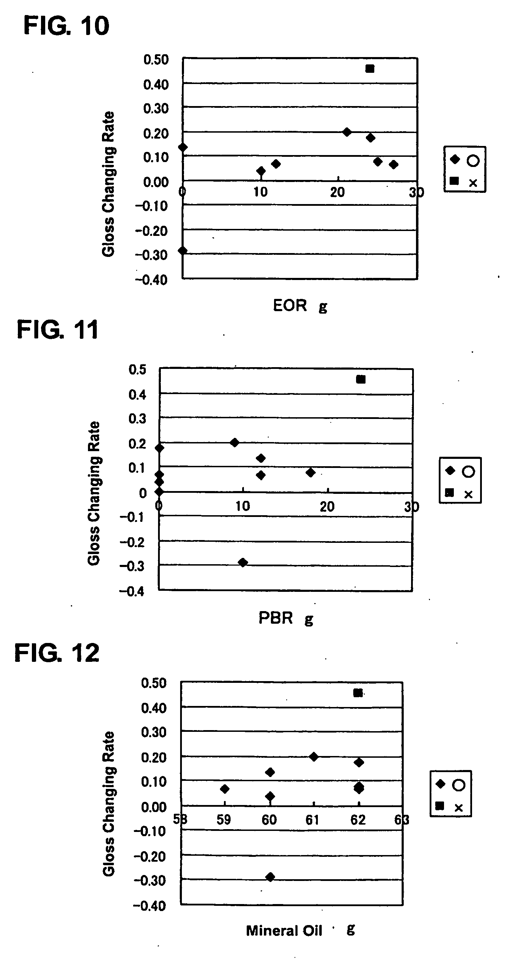

FIG. **10** is a graph showing how the EOR content of the composition affects the changing rate of the gloss, with data of some of the above-described examples and comparative samples (the examples 1, 2, comparative samples 1 - 4, 8, 22, 31). No particular relationship between them was recognized. Cases showing the EOR content of 10 g, 12 g and 25 g were respectively samples containing the PBR of 10 g, 12 g and 12 g (the example 1, the comparative samples 4 and 22). Herein, there was a tendency in comparing these three cases that the gloss changing rate may deteriorate slightly as the content of the EOR increase. A case showing the gloss changing rate of 0.45 (inferior gloss-change resistance) was the comparative sample 2 containing the PBR of 24 g.

FIG. **11** is a graph showing how the EOR content of the composition affects the changing rate of the gloss, with data of some of the above-described examples and comparative samples (the examples 1, 2, comparative samples 1 - 4, 8, 22, 31). Although no particular relationship between them was recognized when the PBR content is 20 g or less, the gloss changing rate was 0.45 or so, namely deteriorated when the PBR content became 24 g.

FIG. **12** is a graph showing how the mineral oil content of the composition affects the changing rate of the gloss, with data of some of the above-described examples and comparative samples (the examples 1, 2, comparative samples 1 - 4, 8, 22, 31). No particular relationship between them was recognized.

Accordingly, it can be apparent from the above that the too-much content of the PBR may deteriorate the gloss changing rate greatly, and it may be preferable that the PBR content be 23 parts by weight or less, and it may not be preferable that the EOR be contained too much. Moreover, it was recognized as shown in the table 2 that the examples 1 and 2 showed a properly less changing rate of the gloss (good) with the eyes observation after the testing.

- Concerning Average Coefficient of Friction -

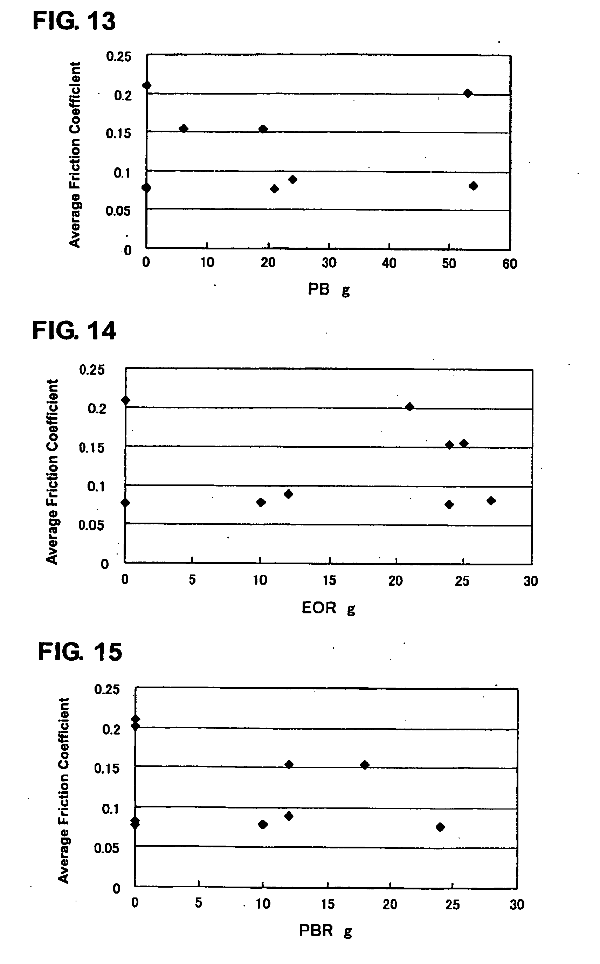

FIG. **13** is a graph showing how the PB content of the composition affects the average friction coefficient, with data of some of the above-described examples and comparative samples (the examples 1, 2, comparative samples 1 - 4, 8, 22, 31). No particular relationship between them was recognized. It was apparent that when the PB content was 22 g or less, the average friction coefficient became 0.27 or less, so the proper humidity feelings (less clammy) could be obtained with the average friction coefficient became 0.25 or less.

FIG **14** is a graph showing how the EOR content of the composition affects the average friction coefficient, with data of some of the above-described examples and comparative samples (the examples 1, 2, comparative samples 1 - 4, 8, 22, 31). No particular relationship between them was recognized. It was apparent that when the EOR content was 30 g or less, the average friction coefficient became 0.27 or less, so the proper humidity feelings (less clammy) could be obtained with the average friction coefficient became 0.25 or less.

FIG. **15** is a graph showing how the PBR content of the composition affects the average friction coefficient, with data of some of the above-described examples and comparative samples (the examples 1, 2, comparative samples 1 - 4, 8, 22, 31). No particular relationship between them was recognized. It was apparent that when the PBR content was 23 g or less, the average friction coefficient became 0.27 or less, so the proper humidity feelings (less clammy) could be obtained with the average friction coefficient became 0.25 or less.

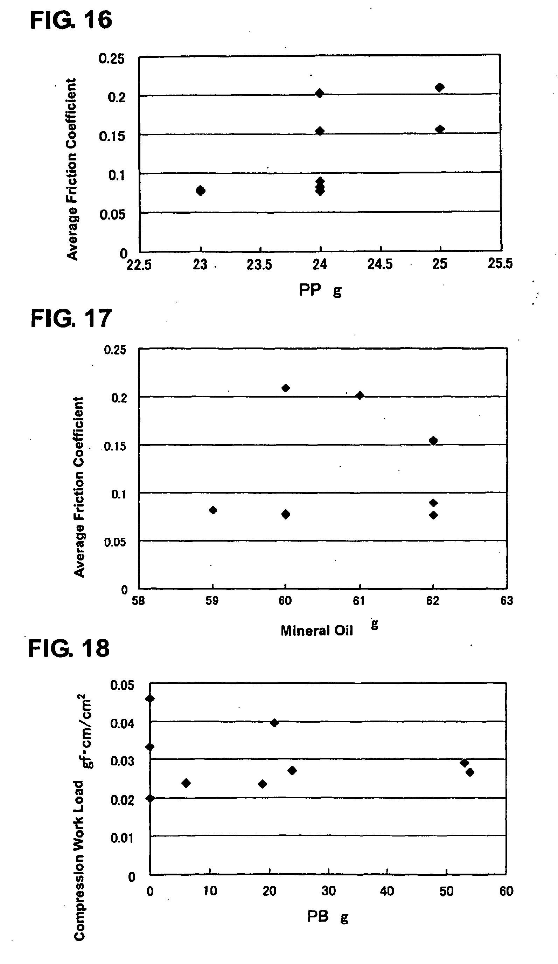

FIG. **16** is a graph showing how the PP content of the composition affects the average friction coefficient, with data of some of the above-described examples and comparative samples (the examples 1, 2, comparative samples 1 - 4, 8, 22, 31). There was a tendency that the average friction coefficient increased as the PP content increased. However, it was apparent that when the PP content was 30 g or less, the average friction coefficient became 0.27 or less, and the proper humidity feelings (less clammy) could be obtained with the average friction coefficient became 0.25 or less.

FIG. **17** is a graph showing how the mineral oil content of the composition affects the average friction coefficient, with data of some of the above-described examples and comparative samples (the examples 1, 2, comparative samples 1 - 4, 8, 22, 31). No particular relationship between them was recognized when the mineral oil content was 65 g or less, and it was apparent that the proper humidity feelings (less clammy) could be obtained with the average friction coefficient of 0.27 or less, particularly 0.25 or less.

- Concerning Compression Work Load -

FIG. **18** is a graph showing how the PB content of the composition affects the compression work load, with data of some of the above-described examples and comparative samples (the examples 1, 2, comparative samples 1 - 4, 8, 22, 31). Herein, there was a tendency that too little PB content may increase the compression work load. Cases showing the small compression work load with the zero of PB content were the example 1 and the comparative sample 2, whose hardness were adjusted by the contents of the EOR and the PBR.

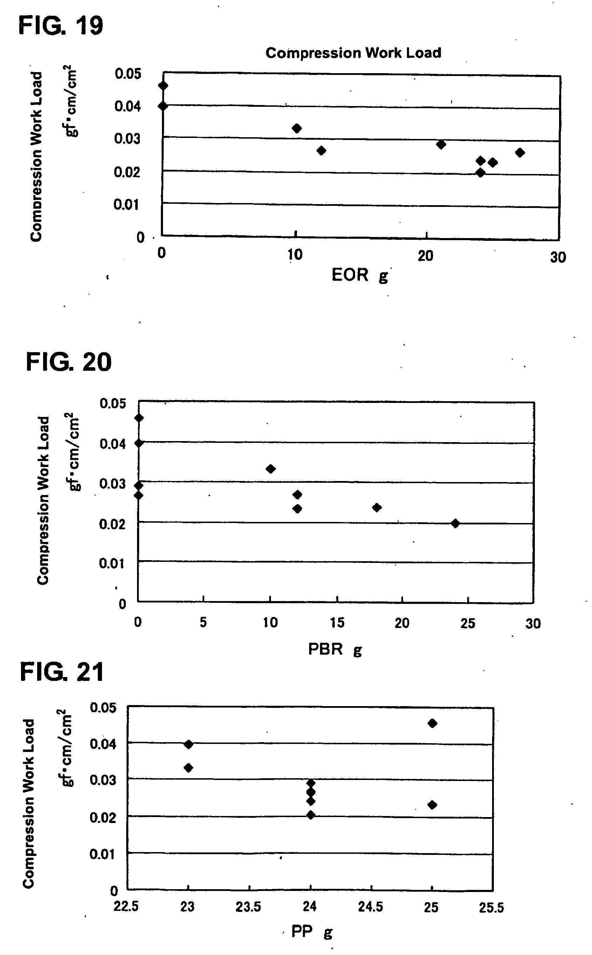

FIG. **19** is a graph showing how the EOR content of the composition affects the compression work load, with data of some of the above-described examples and comparative samples (the examples 1, 2, comparative samples 1 - 4, 8, 22, 31). Herein, there was a tendency that too little EOR content may increase the compression work load.

FIG. **20** is a graph showing how the PBR content of the composition affects the compression work load, with data of some of the above-described examples and comparative samples (the examples 1, 2, comparative samples 1 - 4, 8, 22, 31). Herein, there was a tendency that too little PBR content may increase the compression work load. Cases showing the small compression work load with the zero of PBR content were the comparative samples 8 and 31, whose hardness were adjusted by the contents of the PB and the EOR.

FIG. **21** is a graph showing how the PP content of the composition affects the compression work load, with data of some of the above-described examples and comparative samples (the examples 1, 2, comparative samples 1 - 4, 8, 22, 31). Herein, no particular relationship between them was recognized.

FIG. **22** is a graph showing how the mineral oil content of the composition affects the compression work load, with data of some of the above-described examples and comparative samples (the examples 1, 2, comparative samples 1 - 4, 8, 22, 31). Herein, there was a tendency that too little mineral oil content may increase the compression work load. A case showing the small compression work load with the mineral oil content of 59 g was the comparative sample 8 whose hardness was adjusted by the contents of the PB and the EOR.

It was recognized as shown in the table 2 that the examples 1 and 2 obtained the average friction coefficient of 0.27 or less and the compression work load of 0.022 gf·cm/cm$^2$ or more, and therefore they showed the proper humidity feeling (properly clammy and dry) and the proper hardness (not too hard).

Further, it was recognized that the examples 1 and 2 obtained the compression recovery property of 53% or more, particularly its high value of 80% or so, the compression recovery work load of 0.012 gf·cm/cm$^2$ or more, and the compression distortion of 0.0019 cm or more, and therefore they showed the proper tactile quality that is equivalent to or better than that of the polyvinyl chloride.

- Concerning Wear Resistance -

It was recognized as shown in the table 2 that the examples showed the grade of the wear resistance of "1.0" or more, which was proper from a practical perspective.

- Concerning Scratch Resistance -

It was recognized as shown in the table 2 that the examples showed the grade of the scratch resistance of "4.0" or more, which was superior in the scratch resistance.

- Concerning Synthetic Sebum Contamination Resistance -

It was recognized as shown in the table 2 that the examples showed the grade of the synthetic sebum contamination resistance of "2.5" or more, which was superior in the synthetic sebum contamination resistance.

The skin material of the trim member for the automotive vehicle according to the present invention may be produced efficiently by the injection molding, for instance. The present invention also may be applied to any product, such as a console lid, an instrument panel, any switches or the like, and any other products that are produced by another process than the injection molding.

Moreover, according to the present invention, by the injection molding with a first layer of the present thermoplastic elastomer material applied on the surface of the molded member and with a second layer of a long glass fiber reinforced PP applied on the back face of the molded member, a module trim member for an automotive vehicle, such as a lift gate module, a trim module, or a door module, which has a sufficient hardness and a proper tactile quality, may be produced.

## Claims

1. A thermoplastic elastomer composition, comprising per 100 parts by weight of ethylene-propylene-diene rubber (EPDM):

    20 to 30 parts by weight of polypropylene;
    7 to 30 parts by weight of ethylene octene rubber (EOR);
    7 to 23 parts by weight of propylene butene rubber (PBR); and
    55 to 65 parts by weight of mineral oil.

2. The thermoplastic elastomer composition of claim 1, further comprising 22 parts by weight or less of poly(1-butene) per 100 parts by weight of the EPDM.

3. The thermoplastic elastomer composition of claim 2, wherein the content of said poly(1-butene) is 10 parts by weight or less.

4. The thermoplastic elastomer composition of any one of claims 1 to 3, wherein the mineral oil is selected from paraffin family process oils.

5. The thermoplastic elastomer composition of any one of claims 1 to 4, wherein the particle size of the EPDM, the EOR and the PBR is 0.3 $\mu$m or more.

6. A molded member obtained by molding the thermoplastic elastomer composition of any one of claims 1 through 5.

7. The molded member of claim 6, wherein said molded member is a trim member for a vehicle.

**EP 1 867 678 B1**

**Patentansprüche**

1. Thermoplastische Elastomerzusammensetzung, umfassend pro 100 Gew.-Teilen Ethylen-Propylen-Dien-Kautschuk (EPDM):

   20 bis 30 Gew.-Teile Polypropylen,
   7 bis 30 Gew.-Teile Ethylen-Octen-Kautschuk (EOR),
   7 bis 23 Gew.-Teile Propylen-Buten-Kautschuk (PBR) und
   55 bis 65 Gew.-Teile Mineralöl.

2. Thermoplastische Elastomerzusammensetzung gemäß Anspruch 1, weiter umfassend 22 Gew.-Teile oder weniger Poly(1-buten) pro 100 Gew.-Teilen des EPDM.

3. Thermoplastische Elastomerzusammensetzung gemäß Anspruch 2, wobei der Gehalt an dem Poly(1-buten) 10 Gew.-Teile oder weniger beträgt.

4. Thermoplastische Elastomerzusammensetzung gemäß einem der Ansprüche 1 bis 3, wobei das Mineralöl aus Prozessölen der Paraffin-Familie ausgewählt ist.

5. Thermoplastische Elastomerzusammensetzung gemäß einem der Ansprüche 1 bis 4, wobei die Teilchengröße des EPDM, des EOR und des PBR 0,3 $\mu$m oder mehr beträgt.

6. Formgegenstand, erhalten durch Formen der thermoplastischen Elastomerzusammensetzung gemäß einem der Ansprüche 1 bis 5.

7. Formgegenstand gemäß Anspruch 6, wobei der Formgegenstand ein Verkleidungselement für ein Fahrzeug ist.


**Revendications**

1. Composition d'élastomère thermoplastique, comprenant pour 100 parties en poids de caoutchouc d'éthylène-propylène-diène (EPDM) :

   20 à 30 parties en poids de poly(propylène) ;
   7 à 30 parties en poids de caoutchouc d'éthylène-octène (EOR) ;
   7 à 23 parties en poids de caoutchouc de propylène-butène (PBR) ; et
   55 à 65 parties en poids d'huile minérale.

2. Composition d'élastomère thermoplastique selon la revendication 1, comprenant en outre 22 parties en poids ou moins de poly(1-butène) pour 100 parties en poids d'EPDM.

3. Composition d'élastomère thermoplastique selon la revendication 2, dans laquelle la teneur en ledit poly (1-butène) est de 10 parties en poids ou moins.

4. Composition d'élastomère thermoplastique selon l'une quelconque des revendications 1 à 3, dans laquelle l'huile minérale est choisie parmi les huiles de traitement de la famille des paraffines.

5. Composition d'élastomère thermoplastique selon l'une quelconque des revendications 1 à 4, dans laquelle la taille de particule de l'EPDM, de l'EOR et du PBR est de 0,3 $\mu$m ou plus.

6. Organe moulé obtenu en moulant la composition d'élastomère thermoplastique selon l'une quelconque des revendications 1 à 5.

7. Organe moulé selon la revendication 6, dans lequel ledit organe moulé est un organe de sellerie pour un véhicule.

## FIG. 1

## FIG. 2

## FIG. 3

Compression Load

Displacement

## FIG. 4

**FIG. 5**

**FIG. 6**

## FIG. 7

## FIG. 8

## FIG. 9

**FIG. 10**

EOR g

**FIG. 11**

PBR g

**FIG. 12**

Mineral Oil · g

## FIG. 13

## FIG. 14

## FIG. 15

## FIG. 16

## FIG. 17

## FIG. 18

## FIG. 19

## FIG. 20

## FIG. 21

**FIG. 22**

**FIG. 23**

**FIG. 24**

**EP 1 867 678 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040157998 A